Europäisches Patentamt

European Patent Office

Office européen des brevets

(19)

(11) EP 0 849 100 A1

(12) EUROPEAN PATENT APPLICATION

(43) Date of publication:
24.06.1998 Bulletin 1998/26

(51) Int Cl.$^6$: B60C 9/20

(21) Application number: 97310272.6

(22) Date of filing: 18.12.1997

(84) Designated Contracting States:
AT BE CH DE DK ES FI FR GB GR IE IT LI LU MC NL PT SE
Designated Extension States:
AL LT LV MK RO SI

(30) Priority: 19.12.1996 JP 339162/96

(71) Applicant: SUMITOMO RUBBER INDUSTRIES LTD.
Hyogo-ken (JP)

(72) Inventor: Miyazaki, Tatsuya
Akashi-shi, Hyogo-ken (JP)

(74) Representative: Stewart, Charles Geoffrey
Dunlop Tyres Ltd
Fort Dunlop, Erdington,
Birmingham B24 9QT (GB)

(54) Heavy duty radial tyre

(57) A heavy duty radial tyre comprising a belt (11) having a 1st ply (11), a 2nd ply (12) and a 3rd ply (13) disposed radially outside a carcass (6) in the tread portion (2), each belt ply being of parallel cords laid at an angle of from 15 to 30 degrees with respect to the tyre equator, and the ply strength (S1) of the radially inner-most 1st ply (11) is in the range of from 0.8 to 1.5 times, more preferably 1.0 to 1.2 times the sum (S2+S3) of the ply strength (S2) of the 2nd belt ply (12) and the ply strength (S3) of the 3rd belt ply (13). The cord angles a of the 1st, 2nd and 3rd belt plies may be substantially the same absolute values, and the cord inclination ($\alpha$1) of the 1st ply (11) may be reversed to the cord inclinations ($\alpha$2$\alpha$3) of the 2nd and 3rd belt plies (12,13).

## Fig.1

## Description

The present invention relates to a pneumatic radial tyre for heavy duty vehicles, more particularly to an improved tread reinforcing belt which is capable of maintaining the tyre strength even if the radially outermost ply is damaged.

In general, it is important in belted radial tyres that the belt strength is high enough to prevent the belt from being cut when the tyre treads on sharp edged objects, thus to prevent the tyre from blowing out. This is especially important for heavy duty radial tyres such as truck/bus tyres because the tyre load is heavy and the air pressure is very high.

When the tyre goes over a sharp edged object, the belt is bent radially inward and the belt cord angles are more or less changed. If the ply strength of the radially innermost belt ply (hereinafter the 1st ply) is too large then there is caused change in the cord angles of the radially outer belt plies (2nd, 3rd --- belt plies), and the cords of the radially outer belt plies are liable to be cut or broken.

When the belt is bent radially inward, the stress of the belt is such that the radially inner the ply position, the larger the tensile stress. Thus, cord break is more liable to occur in the inner 2nd belt ply more than the outer 3rd belt ply.

The laid-open Japanese patent application No. JP-A-8-244407 discloses a heavy duty radial tyre, in which the belt comprises a 1st ply having a cord angle of 35 to 80 degrees and 2nd and 3rd belt plies with cord angles which are 15 to 30 degrees, and the 1st ply is decreased in ply strength to obtain a good envelope effect and thereby to improve the tyre strength. That is, when the tyre goes over edged objects, the cord angles of the 2nd and 3rd belt plies change relatively easily according to the bending deformation, and breakage of the 2nd and 3rd belt ply cords can be controlled. As a result, the belt strength is improved.

In this belt structure, however, when the radially outer 3rd belt ply is damaged or broken, the required tread rigidity can not be maintained by only the 1st and 2nd belt plies since the ply strength of the 1st ply is low as explained above. Thus, the tyre strength decreases quickly. This is a serious weak point in trucks having to run on rough roads such as on construction sites and the like.

It is therefore, an object of the present invention to provide a heavy duty radial tyre, in which the tyre strength can be improved and the above problems avoided.

According to one aspect of the present invention, a heavy duty radial tyre comprises a carcass extending between a pair of axially spaced bead portions through a tread portion and a pair of sidewall portions, and a belt disposed radially outside the carcass in the tread portion, wherein the belt comprises a 1st ply, a 2nd ply and a 3rd ply disposed radially outwardly in this order, each of the 1st, 2nd and 3rd plies being made of parallel cords laid at an angle of from 15 to 30 degrees with respect to the tyre equator, and the ply strength (S1) of the 1st ply being in the range of from 0.8 to 1.5 times, the sum (S2+S3) of the ply strength (S2) of the 2nd belt ply and the ply strength (S3) of the 3rd belt ply, where the ply strength is the total tensile strength of the belt cords per unit width of the ply in a direction normal to the belt cords.

More preferably the strength of the 1st ply is in the range of 1.0 to 1.2 times the sum (S2+S3).

Preferably, the cord angles of the 1st, 2nd and 3rd belt plies are substantially the same absolute values, and the cord inclination of the 1st ply is reversed to the cord inclinations of the 2nd and 3rd belt plies.

An embodiment of the present invention will now be described by way of example only in detail in conjunction with the accompanying drawings, in which:

Fig.1 is a meridian cross sectional view of an embodiment of the present invention;
Fig.2 is a developed plan view of the belt thereof; and
Fig.3 is a diagram for explaining the cross arrangement of the cords of the 1st to 3rd belt plies.

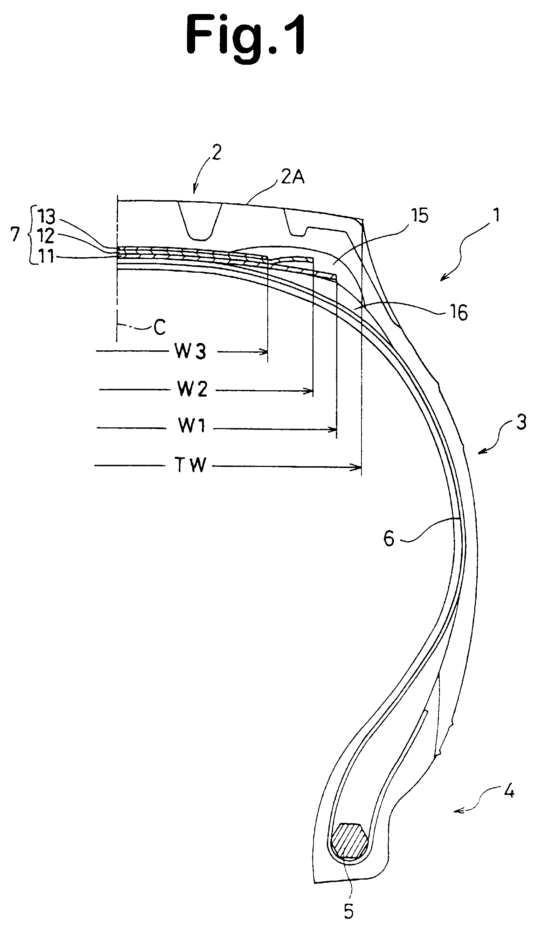

In Fig.1, a heavy duty radial tyre 1 comprises a tread portion 2, a pair of axially spaced bead portions 4 each with a bead core therein, a pair of sidewall 3 portions extending between the tread edges and the bead portions, a toroidal carcass 6 extending between the bead portions 4, and a belt 7 disposed radially outside the carcass 6 and inside a rubber tread.

The carcass 6 comprises at least one ply of cords arranged radially at angle of from 75 to 90 degrees with respect to the tyre equator C, extending between the bead portions 4 through the tread portion 2 and sidewall portions 3 and being turned up around the bead cores 5.

For the carcass cords, steel cords are used in this embodiment. However, organic fibre cords, e.g. polyester, rayon, aromatic polyamide, nylon, and the like can be used.

The belt 7 comprises a 1st ply 11, a 2nd ply 12 and a 3rd ply 13 disposed in this order from the radially inside to outside of the tyre.

The axial width W2 of the 2nd belt ply 12 is smaller than the axial width W1 of the 1st belt ply 11 but larger than the axial width W3 of the 3rd belt ply 13.

The axial width W1 which is the maximum belt width is set in the range of 0.80 to 0.95 times the tread width TW so as to reinforce, by its hoop effect, over substantially the whole width of the tread portion 2.

The width W3 of the 3rd belt ply 13 is not less than 0.6 times the width W1.

The 1st belt ply 11 adjoins the carcass 6 in the central portion, but the axial edge portions are gradually spaced apart therefrom towards the extreme ends.

Also, the 2nd belt ply 12 adjoins the 1st belt ply 11 in the central portion, but the axial edge portions are gradually spaced apart therefrom towards the extreme edges from the axial edges of the 3rd belt ply 13.

In those spaces between the plies in the edges, cushion rubber layers 15 and 16 tapering axially inwardly are disposed to mitigate the stresses concentrated on the belt cord ends.

In this example, each of the belt plies 11, 12 and 13 is made of steel cords 20 laid parallel with each other.

The cord angles $\alpha1$, $\alpha2$ and $\alpha3$ of the belt plies 11, 12 and 13, respectively, are in the range of from 15 to 30 degrees to the tyre equator C.

The cord angles $\alpha1$, $\alpha2$, $\alpha3$ are substantially the same absolute value so that differences therebetween are not more than 2 degrees.

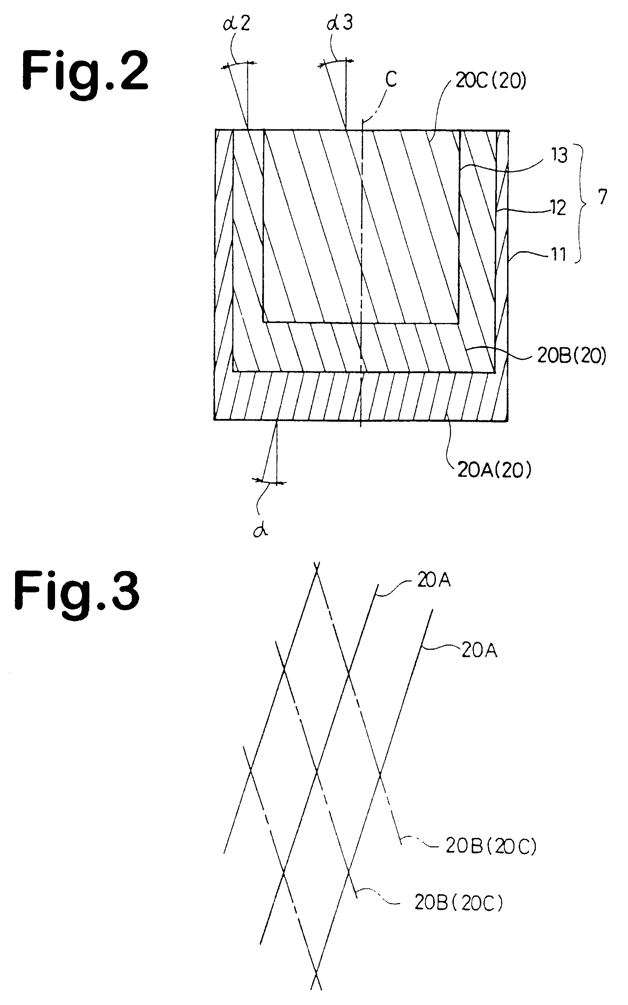

The belt cords 20A of the 1st belt ply 11 have a right side upward inclination in the example of Fig.2, but the belt cords 20B and 20C of the 2nd and 3rd belt plies 12 and 13 have a left side upward inclination.

The ply strength S1 of the 1st belt ply is set in the range of from 0.8 to 1.5 times the sum (S2+S3) of the ply strengths S2 and S3 of the 2nd and 3rd belt plies.

Here, the ply strength S is the total tensile strength of the belt cords per unit width of the ply in the direction normal to the belt cords.

In this example, the ply strength is the product EXN of the cord count N per unit width of the ply in the direction normal to the belt cords, for example 5 cm width, and the tensile strength E of a cord 20.

$$S1 = E1 \text{ X } N1, \ S2 = E2 \text{ X } N2, \ S3 = E3 \text{ X } N3$$

Although the 1st belt ply 11 is subjected to the largest tensile stress when the belt is bent inwardly, this ply 11 can be effectively prevented from cord cut and ply breakage because of the largest strength S1.

As shown in Fig.3, a rhombic cord arrangement is formed rather than the rigid triangle cord arrangement which is conventionally employed. As a result, it becomes easy for the belt cords to move when the belt is bent. Therefore, the cords of the 2nd and 3rd belt plies can be prevented from breaking in spite of the larger ply strength S1, and the tyre strength can be greatly improved. Further, the rigidity of the belt as a whole is increased and steering stability is effectively improved.

Furthermore, owing to the rhombic cord arrangement and the largest ply strength S1, even if the 3rd belt ply 13 is damaged, a great decrease in the tread rigidity and tyre strength of the conventional triangular cord arrangement can be avoided.

If the ply strength S1 is less than 0.8 times the sum strength S2+S3, the above-explained effects are not be obtained.

Preferably, the ply strength S1 is set in the range of not less than 0.9 times, more preferably not less than 1.0 times the sum strength S2+S3.

If the ply strength S1 is more than 1.5 times the sum strength S2+S3, the tyre strength is improved little, but the tyre weight is unfavourably increased, and also the manufacturing cost is increased.

Preferably, the ply strength S1 is set in the range of not more than 1.2 times the sum strength S2+S3.

If the cord angles $\alpha1$, $\alpha2$ and $\alpha3$ are less than 15 degrees, the belt rigidity decreases.

If the cord angles $\alpha1$, $\alpha2$ and <a>3 are more than 30 degrees, the hoop effect on the carcass so too small.

In the present invention, it is possible to dispose a 4th belt ply on the radially outside of the 3rd belt ply 13 although such a 4th belt ply is not necessary because a great decrease in tyre strength due to cord cut damage is avoided. This contributes to a tyre weight reduction.

<u>Comparison Test</u>

Test tyres having the structure shown in Fig.1 were made, and the tyre strength (breaking energy value) was measured for each according to the test method specified in Japanese Industrial Standard JIS-D4230.

The tyre specifications and test results are shown in Table 1, and the belt ply structures are shown in Table 2. The test results are indicated by an index based on that Ref.1 is 100.

Tyre size 12.00R24
Rim size 8.5X24
Inner pressure 7.75 kgf/sq.cm

From the test, it was confirmed that the tyre strength per belt weight was high when the ply strength ratio S1/(S1+S2) was in the range of from 0.8 to 1.5, and even more so when the ply strength ratio was in the range of from 1.0 to 1.2, and thus the tyre strength was effectively increased.

Table 1

| Tire | Ex.1 | Ex.2 | Ex.3 | Ex.4 | Ex.5 | Ref. 1 | Ref. 2 | Ref.3 |
|---|---|---|---|---|---|---|---|---|
| Carcass | 1 90 degrees 3+8+13/0.175 | | | | | | | |
|   Number of ply | | | | | | | | |
|   Cord angle | | | | | | | | |
|   Cord structure | | | | | | | | |
| Belt | | | | | | | | |
| 3rd ply | | | | | | | | |
|   Ply type | B | B | B | B | B | C | D | C |
|   Cord angle $\alpha 3$ (deg.) *1 | 18 | 18 | 18 | 18 | 18 | 18 | 18 | 18 |
|   Width W3 (mm) | 130 | 130 | 130 | 130 | 130 | 130 | 130 | 130 |
|   Strength 53 (kgf/5cm) | 2112 | 2112 | 2112 | 2112 | 2112 | 4160 | 6360 | 4160 |
|   Total cord weight G3(g) | 65.8 | 65.8 | 65.8 | 65.8 | 65.8 | 139 | 191.3 | 138.6 |
| 2nd ply | | | | | | | | |
|   Ply type | D | E | C | A | B | C | D | C |
|   Cord angle $\alpha 2$ (deg.) *1 | 18 | 18 | 18 | 18 | 18 | 18 | 18 | -18 |
|   Width W2 (mm) | 170 | 170 | 170 | 170 | 170 | 170 | 170 | 170 |
|   Strength S2 (kgf/5cm) | 6360 | 5300 | 4160 | 3200 | 2112 | 4160 | 6360 | 4160 |
|   Total cord weight G2(g/m) | 191.2 | 170 | 138.6 | 106.6 | 65.8 | 139 | 191.3 | 138.6 |
| 1st ply | | | | | | | | |
|   Ply type | D | D | D | D | D | C | D | C |
|   Cord angle $\alpha 1$ (deg.) *1 | -18 | -18 | -18 | -18 | -18 | -18 | -18 | -18 |
|   Width W (mm) | 190 | 190 | 190 | 190 | 190 | 190 | 190 | 190 |
|   Strength S (kgf/5cm) | 6360 | 6360 | 6360 | 6360 | 6360 | 4160 | 6360 | 4160 |
| S1/(S2+S3) | 0.8 | 0.9 | 1 | 1.2 | 1.5 | 0.5 | 0.5 | 0.5 |
| G1+G2+G3(=G0) | 448.4 | 427.1 | 395.7 | 363.7 | 322.9 | 416 | 573.8 | 415.8 |
| Tire strength P | 125 | 135 | 150 | 130 | 85 | 100 | 140 | 120 |
| P/GO | 0.28 | 0.32 | 0.38 | 0.36 | 0.26 | 0.24 | 0.24 | 0.24 |

*1) +: Left side upward inclination    -: Right side upward inclination

Table 2

| Ply type | A | B | C | D | E |
|---|---|---|---|---|---|
| Cord structure | 1+3/0.20 | 2+7/0.22 | 1+3/0.20 | 3+8+13 /0.23 | 3+9+15 /0.22 |
| Cord strength E (kgf) | 160 | 88 | 160 | 265 | 265 |
| Cord weight g (g/m) | 5.33 | 2.74 | 5.33 | 7.97 | 8.5 |
| Cord count N /5cm width | 20 | 24 | 26 | 24 | 20 |
| Ply strength S /5cm width (=EXN) | 3200 | 2112 | 4160 | 6360 | 5300 |
| Total cord weight /5cm width (=gXN) | 106.6 | 65.8 | 138.6 | 191.28 | 170 |

## Claims

1. A heavy duty radial tyre comprising a carcass (6) extending between a pair of axially spaced bead portions (4) through a tread portion (2) and a pair of sidewall portions (3), and a belt (7) disposed radially outside the carcass (6) in the tread portion, the belt comprising a 1st ply (11), a 2nd ply (12) and a 3rd ply (13) which are disposed radially outwardly in this order, each of the 1st, 2nd and 3rd plies comprise parallel cords laid at an angle of from 15 to 30 degrees with respect to the tyre equator, characterised in that the ply strength (S1) of the 1st ply (11) is in the range of from 0.8 to 1.5 times the sum (S2+S3) of the ply strength (S2) of the 2nd belt ply (12) and the ply strength (S3) of the 3rd belt ply (13), where the ply strength is the total tensile strength of the belt cords per unit width of the ply in a direction normal to the belt cords.

2. A heavy duty radial tyre according to claim 1, characterised in that the ply strength (S1) of the 1st ply is in the range of from 1.0 to 1.2 times the sum (S2+S3) of the ply strength (S2) of the 2nd belt ply (12) and the ply strength (S3) of the 3rd belt ply (13).

3. A heavy duty radial tyre according to claim 1 or 2, characterised in that the cord angles of the 1st, 2nd and 3rd belt plies (11,12,13) are substantially the same absolute values, and the cord inclination ($\alpha$1) of the 1st ply (11) is reversed to the cord inclinations ($\alpha$1$\alpha$2) of the 2nd and 3rd belt plies.

4. A heavy duty tyre according to any of claims 1 to 3, characterised in that the cord angle $\alpha$1 of the 1st ply (11) is reversed to the cords angles ($\alpha$2$\alpha$3) of the 2nd and 3rd belt plies (12,13).

# Fig.1

# Fig.2

# Fig.3

**European Patent Office**

**EUROPEAN SEARCH REPORT**

Application Number

EP 97 31 0272

## DOCUMENTS CONSIDERED TO BE RELEVANT

| Category | Citation of document with indication. where appropriate, of relevant passages | Relevant to claim | CLASSIFICATION OF THE APPLICATION (Int.Cl.6) |
|---|---|---|---|
| X | EP 0 545 287 A (MICHELIN & CIE) * page 3; claims; table 1 * * page 1, line 8 – line 30 * --- | 1-4 | B60C9/20 |
| A | EP 0 477 771 A (MICHELIN RECH TECH) --- | 1 | |
| A | EP 0 730 987 A (SUMITOMO RUBBER IND) * claims; figures * | 1 | |
| D | & JP 08 244 407 A (...) | 1 | |
| A | EP 0 568 870 A (MICHELIN RECH TECH) * claims; figures * --- | 1 | |
| A | FR 2 512 747 A (BRIDGESTONE TIRE CO LTD) ----- | 1 | |

**TECHNICAL FIELDS SEARCHED (Int.Cl.6)**

B60C

The present search report has been drawn up for all claims

| Place of search | Date of completion of the search | Examiner |
|---|---|---|
| THE HAGUE | 18 March 1998 | Baradat, J-L |

EPO FORM 1503 03.82 (P04C01)